# EUROPÄISCHE PATENTSCHRIFT

(11) **EP 3 174 707 B1**
(45) Veröffentlichungstag und Bekanntmachung des Hinweises auf die Patenterteilung: **11.10.2023**
(21) Anmeldenummer: 15729745.8
(22) Anmeldetag: 18.05.2015
(51) Int. Cl.: B32B 7/12, B32B 15/082, B32B 15/095, B32B 15/098, B32B 15/10, B32B 15/20, B32B 21/08, B32B 21/10, B32B 21/14, B32B 3/12, B32B 17/06, B32B 38/08, B32B 37/12

(54) **VERBUNDELEMENT MIT EINER DECKSCHICHT AUS FURNIER**
COMPOSITE ELEMENT WITH A COVERING LAYER OF VENEER
ÉLÉMENT COMPOSITE COMPRENANT UNE COUCHE DE RECOUVREMENT FORMÉE D'UNE FEUILLE DE PLACAGE

(30) Priorität: 21.05.2014 AT 503642014
(43) Veröffentlichungstag der Anmeldung: 07.06.2017
(73) Patentinhaber: F. List GmbH, 2842 Thomasberg (AT)
(72) Erfinder: BUCHINGER, René, 2491 Neufeld an der Leitha (AT)
(74) Vertreter: Patentanwaltskanzlei Matschnig & Forsthuber OG
(86) Internationale Anmeldenummer: PCT/AT2015/050124
(87) Internationale Veröffentlichungsnummer: WO 2015/176093

(56) Entgegenhaltungen:
- EP-A2- 2 522 503
- WO-A1-2006/011728
- DE-A1- 2 318 049
- DE-U1- 29 713 040
- DE-U1-202011 002 155
- DE-U1-202013 100 186
- JP-A- H10 298 456
- JP-A- 2001 058 301

## Beschreibung

Die Erfindung betrifft ein Verbundelement, umfassend ein Kernelement, welches Kernelement aus einem nicht brennbaren Material gebildet ist.

An die im Yachtbau und in Schiffen, insbesondere Kreuzfahrtschiffen verwendeten Materialien, welche etwa beim Innenausbau, z.B. der Kabinen zum Einsatz kommen, werden hohe Anforderungen gestellt, insbesondere was die Feuerfestigkeit dieser Materialien betrifft.

Beispielsweise werden solche Materialien für Wandaufbauten, Wandunterkonstruktionen, zur Deckenmontage, für Deckenunterkonstruktionen, Lüftungsboxen für Yachten und Kreuzfahrtschiffe etc. verwendet.

Neben der Feuerfestigkeit ist es auch noch von Vorteil, wenn diese Materialien relativ leichtgewichtig sind.

Um den Anforderungen des PYC ("Passenger Yacht Code") und des IMO FTP Codes 2010 gerecht zu werden, müssen die im Gesamtaufbau verwendeten Materialien Steuerrad zertifiziert sein. Der PYC verlangt steuerradzugelassene Einzelkomponenten in der Konstruktion von Wänden, Decken und Schotte sowie zusätzlich eine Prüfung des Gesamtaufbaus.

Damit die verwendeten Materialien einen hochwertigen Eindruck vermitteln, ist die Verwendung von Holz, insbesondere von Echtholz wünschenswert. Damit das Holz einen besonders hochwertigen Eindruck in optischer und auch haptischer Hinsicht bietet, wird dabei die oberste Schicht, die Holzschicht des Verbundelementes mit einem transparenten Lack versehen, sodass ein glänzender Eindruck entsteht. Zusätzlich bietet der Lack auch eine Schutzfunktion gegenüber Klimaeinflüssen.

Wie oben schon erwähnt, muss, um den Anforderungen des PYC (Passenger Yacht Code) und des IMO FTP Codes 2010 gerecht zu werden, der verwendete Gesamtaufbau, d.h. ein verwendetes Verbundelement im eingesetzten Zustand geprüft werden. Konkret bedeutet das, dass ein Lacksystem für Holzoberflächen auch auf diese Anforderungen zu prüfen ist.

Bis dato wurden Lacke nur auf Alu oder Stahlblechen nach IMO FTP Code Part 5 und 2 geprüft, um eine Zulassung EG-Schiffsausrüstungsrichtlinie - MED zu erhalten. Mit Änderung des FTP Codes im Juli 2013 wird hier zwischen "nicht brennbaren metallischen" und "nicht brennbar nicht metallischen" Trägern unterschieden. Um eine Steuerradzulassung für den Einsatz von Holzlacken zu erhalten, ist es jetzt notwendig, auf einem "nicht brennbaren nicht metallischen" Träger zu prüfen. Die Empfehlung der zuständigen Behörde in Absprache mit diversen Prüfinstituten ist es, diese Lacke auf Calziumsilikatplatten zu prüfen. Damit würde man aber nur den Anforderungen an den FTP Code gerecht werden, nicht aber den Anforderungen des PYC.

Der PYC verlangt gemäß EG-Schiffsausrüstungsrichtlinie - MED zugelassene Einzelkomponenten in der Konstruktion von Wänden, Decken und Schotte sowie zusätzlich eine Prüfung des Gesamtaufbaus.

Da es bis zum jetzigen Zeitpunkt nicht möglich war, einen solchen Gesamtaufbau umzusetzen, werden von den zuständigen Behörden Ausnahmen zugelassen. Diese Ausnahmen sind mit erhöhtem reaktivem Brandschutz (Sprinkleranlagen) verbunden. Außerdem entsprechen diese zugelassenen Einzelkomponenten meistens nicht den optischen Anforderungen im Luxussegment und sind mit einem erhöhten Produktionsaufwand verbunden.

Die DE 20 2013 100186 U1 und die DE 23 18 049 A1 zeigen dabei Verbundelemente aus dem Stand der Technik. Die JPH10298456A zeigt einen transparenten Lack, der eine nicht brennbare Lackschicht mit einer Schichtdicke von 80 - 150gm bildet.

Es ist eine Aufgabe der Erfindung, ein Verbundelement anzugeben, welches eine flammgeschützte Konstruktion aufweist, die den Anforderungen aus brandtechnischer und auch aus qualitätstechnischer Sicht entspricht.

Diese Aufgabe wird mit einem Verbundelement gemäß Anspruch 1 gelöst.

Vorzugsweise ist dabei vorgesehen, dass die Außenfläche des zumindest einen Furnierelementes vollflächig mit der Lackschicht versehen ist. Auf diese Weise ist das gesamte zumindest einen Furnierelement gegen Umwelteinflüsse etc. geschützt und verfügt zusätzlich über eine hochwertige, bei entsprechendem Lack glänzende bzw. hochglänzende optische Erscheinung.

Um die an das Verbundelement gestellten Anforderungen in Hinblick auf Nichtbrennbarkeit zu erfüllen, ist es von Vorteil, wenn das Kernelement derart ausgebildet ist, dass es die Brandprüfung nach IMO FTP Code Part 1 besteht.

Das Kernelement bildet die Trägerplatte für das zumindest eine Furnierelement.

Beispielsweise ist vorgesehen, dass das Kernelement eine Blähglasplatte ist. Eine solche Blähglasplatte besteht die Brandprüfung nach IMO FTP Code Part 1.

Es kann auch vorgesehen sein, dass das Kernelement eine metallische Platte ist.

Mit Vorteil ist dabei vorgesehen, dass die metallische Platte eine Aluwabenplatte ist.

Eine metallische Platte besteht die Brandprüfung nach IMO FTP 2010 Code Part 1. Eine Aluwabenplatte hat zusätzlich den Vorteil, dass sie leicht ist.

Bei einer vorteilhaften Ausführungsform ist vorgesehen, dass die zumindest eine Klebeschicht aus einem Klebstoff oder einer Klebstoffmischung gebildet ist, welcher/welche aus einem Dispersionsklebstoff gebildet ist oder diesen enthält.

Dabei ist bevorzugt vorgesehen, dass die zumindest eine Klebeschicht aus einem Klebstoff oder einer Klebstoffmischung gebildet ist, welcher/welche aus einem Polyvinylacetat gebildet ist oder diesen enthält. PVAc (Polyvinylacetat) Klebstoffe gehören zur Gruppe der Dispersionsklebstoffe.

Der Vorteil von Dispersionsklebstoff im Allgemeinen ist die einfache Verarbeitbarkeit und die sehr hohen Festigkeiten sowie geringe Verfärbung. Der Vorteil von PVAc im Speziellen ist weiters noch, dass dieser farblos und keine gesundheitsbedenklichen Lösemittel enthält bzw. keine gesundheitsbedenklichen Lösemittel verwendet werden müssen, somit unter anderem auch einfache Reinigung der (Fertigungs-)Anlage(n) möglich ist.

Alternativ oder zusätzlich kann vorgesehen sein, dass die zumindest eine Klebeschicht aus einem Klebstoff oder einer Klebstoffmischung gebildet ist, welcher/welche aus einem Polyadditionsklebstoff gebildet ist oder diesen enthält.

Dabei ist bevorzugt vorgesehen, dass der Polyadditionsklebstoff ein PUR (Polyurethane) Klebstoff ist.

Der Vorteil von Polyadditionsklebstoff im Allgemeinen ist jener, dass dieser keine gesundheitsbedenklichen Lösemittel enthält und ein Härten durch Reaktion mit Wasser folgt. Dadurch kommt es auch zu keinen Verfärbungsreaktion mit dem Holz oder Flammschutzmittel.

Der Vorteil von PUR im Speziellen ist die gute Verbindung mit Aluminiumbauteilen, und weiters, dass ein zusätzliches Ausrüsten mit Flammschutz möglich ist. Der Leimdurchschlag hat keinen Einfluss auf das Beizbild. Außerdem gibt es keine Reaktion mit Flammschutz in der Furnier. Die Verklebung ist wasserbeständig.

Alternativ oder zusätzlich kann vorgesehen sein, dass die zumindest eine Klebeschicht aus einem Klebstoff oder einer Klebstoffmischung gebildet ist, welcher/welche aus einem Polykondensationsklebstoff gebildet ist oder diesen enthält.

Der Vorteil von Polykondensationsklebstoff ist die hohe Brandstabilität aufgrund des chemischen Aufbaus. Die Verklebung ist wasserfest, und es sind sehr kurze Presszeiten möglich. Der Polykondensationsklebstoff enthält keine organischen Lösemittel bzw. müssen keine organischen Lösemittel verwendet werden, sodass eine einfache Reinigung der Anlagen möglich ist.

Außerdem von Vorteil kann sein, dass sich eine duroplastisch steife Leimfuge bildet. Eine duroplastische Leimfuge ist grundsätzlich nicht reversibel. Die Verleimung kann also nicht durch Temperatur oder Feuchtigkeit rückgängig gemacht werden.

Es kann vorgesehen sein, dass die zumindest eine Klebstoffschicht aus genau einem Klebstoff bzw. genau einer Klebstoffmischung gebildet ist. Prinzipiell sind aber auch Kombinationen von zwei oder mehreren bzw. allen diesen Klebstoffen möglich, solche Kombinationen sind aber nicht für eine positive Brandprüfung erforderlich.

Vorzugsweise ist vorgesehen, dass der Klebstoff bzw. die Klebstoffmischung in einer Auftragsmenge von 50 - 200 g/m², vorzugsweise von 75 - 150 g/m² aufgebracht ist.

Bei einer Mischung aus zwei oder mehreren Klebstoffen/Klebstoffgemischen beziehen sich diese Angaben auf die Gesamtmenge des Klebstoffes bzw. der Klebstoffmischung.

Mit den oben angeführten Werten wird eine ausreichende Menge an Klebstoff bzw. Klebstoffmischung aufgetragen, um eine ausreichende Haftung zu erzielen. Gleichzeitig ist die Menge gering genug, dass gute Brandergebnisse erzielt werden können.

Vorzugsweise ist vorgesehen, dass die zumindest eine Klebeschicht bzw. die Klebeschichten, insbesondere der Klebstoff oder die Klebstoffmischung, frei von Flammschutzmitteln ist/sind. Besonders bevorzugt ist es, wenn die zumindest eine Lackschicht aus einem transparenten Lack gebildet ist, welcher für den Einsatz auf Echtholz geeignet ist.

Bei Verwendung eines nicht für Echtholz geeigneten Lackes kann es zu Verfärbungen des Holzes kommen (Säuregehalt). Bei nicht hochtransparenten Systemen wird das Erscheinungsbild des Holzes verändert. Es gibt Lacksysteme, die auch aufgrund ihrer Aushärtereaktion (Hochtemperaturlacke) nicht für Echtholz geeignet sind (Holz würde schwarz werden). Außerdem muss der Lack ein Quellen und Schwinden des Holzes erlauben.

Beispielsweise ist vorgesehen, dass die zumindest eine Lackschicht einen Lack bzw. ein Lacksystem enthält, der/das auf einem Polymersystem basiert.

Insbesondere ist es dabei von Vorteil, wenn das Polymersystem ein Isocyanat-vernetzendes Lacksystem ist.

Beispielsweise ist vorgesehen, dass das Lacksystem eine Polyurethan-Lacksystem ist.

Es kann auch vorgesehen sein, dass das Polymersystem Acrylat enthält oder auf Acrylat basiert.

Die Schichtstärke der zumindest einen Lackschicht liegt in einem Bereich von 250 - 1000 µm, beispielsweise von 250 - 900 µm, vorzugsweise im Bereich von 300 - 800 µm, insbesondere im Bereich von 500 - 800 µm.

Eine solche dicke Lackschicht ist zweckmäßig, um die geforderte Lackqualität (Hochglanz) zu erreichen. Auf diese Weise kann eine hochwertige Hochglanzoberfläche auf Furnieren erhalten werden, wobei das Verbundelement die relevante Prüfung bzw. Prüfungen wie eingangs beschrieben trotz dieser dicken Lackschicht besteht.

Hochpolierte Systeme benötigen für ein ansprechendes Erscheinungsbild eine gewisse Lackschichtdicke, ansonsten können die Bauteile nicht poliert werden. Über das Langzeitverhalten wirkt sich eine dickere Lackschichtstärke positiv auf das Erscheinungsbild aus.

Die Grenze liegt dafür bei ca. 900 µm -1000 µm, insbesondere bei 900 µm, da hier die Trübheit wieder stärker wird, außerdem können Spannungsrisse entstehen. Auch von der Verarbeitungszeit ist eine (noch) höhere Schichtdicke kontraproduktiv.

Oftmals ist dabei vorgesehen, dass die zumindest eine Lackschicht aus zwei oder mehreren Unter-Schichten aufgebaut ist, welche Unter-Schichten aus identischen oder zumindest teilweise unterschiedlichen Lacken bestehen.

Dickere Lackschichten von (z.B. 1000 µm) können oftmals nicht in einer Applikation aufgetragen werden und werden in Unter-Schichten aufgebaut (typischerweise mit jeweils ca. 100 - 200 µm Dicke).

Dabei können alle Unter-Schichten aus demselben (identischen) Lack/Lacksystem aufgebaut sein, oder eine oder mehrere Unter-Schichten bestehen aus bestehen aus einem anderen Lack/Lacksystem als der Rest der Unter-Schichten. Es ist allerdings auch möglich, dass jede Unter-Schicht aus einem anderen Lacke/Lacksystem gebildet ist.

Die Unter-Schichten erlauben es, dass man die Lacke bzw. Lacksysteme wechselt. Beispielsweise ist es bei tropischen Hölzern günstig bzw. notwendig, zuerst einen Isoliergrund aufzutragen, um Holzinhaltsstoffe zu sperren (z.B. ein PU (Polyurethan) System, isocyanat-vernetzend). Danach wird ein Lack mit sehr viel Masse aufgetragen, um schnell Schichtdicke aufzubauen. Dieser ist vorzugsweise elastisch und vorzugsweise leicht schleifbar (z.B.: PU System). Als Finish wird mit Vorteil eine sehr harte Lackschicht aufgebracht, welche kratzfest und polierbar ist (z.B. Acrylat/Acrylharz). Bei den unterschiedlichen Lacken/Lacksystemen für die Unter-Schichten der Lackschicht handelt sich vorzugsweise um ähnliche Systeme mit unterschiedlichen physikalischen Eigenschaften.

Der die zumindest eine Lackschicht bildende Lack bzw. Lacksystem ist mit einem oder mehreren Flammschutzmitteln versehen.

Ein Lack besteht aus mehreren Komponenten (z.B. Komponenten A, B und Verdünnung), diese Komponenten können je nach Bedarf im Mischungsverhältnis angepasst werden. Diese Komponenten werden im Gesamten als System bzw. Lacksystem bezeichnet.

Der Lack bzw. das Lacksystem ist dabei bereits vor dem Aufbringen auf das Furnier mit dem Flammschutz versehen.

Bei einer Variante ist das Flammschutzmittel ein organisches oder anorganisches Flammschutzmittel.

Beispielsweise ist der Lack in einem Sprühverfahren oder Walzverfahren aufgetragen.

Beispielsweise ist vorgesehen, dass der Flammschutzmittelanteil 15 - 25% Gewichtsprozent der zumindest einen, mit Flammschutzmittel versehene Lackschicht beträgt.

Ein zu hoher Flammschutzmittelanteil verschlechtert die Transparenz, während ein zu geringer Anteil die Eigenschaften in Hinblick auf Feuerbeständigkeit verschlechtert. Die obigen Werte liefern einen guten Kompromiss.

Weiters kann es zweckmäßig sein, wenn das Flammschutzmittel auf einer Phosphor-Stickstoffbasis basiert.

Stickstoffhaltige Flammschutzmittel können durch Abspaltung inerte Gase (Ammoniak, Stickstoff) in der Gasphase wirken oder durch Kondensationsreaktionen Verkohlung in der Festphase hervorrufen.

Es kann zur Bildung einer festen, verkohlten Oberflächenschicht aus Phosphorverbindungen und in bestimmten Fällen zu einer Unterbrechung der Radikalkettenmechanismen des Verbrennungsprozesses in der Gasphase kommen.

Weiters haben solche stickstoffhaltige Flammschutzmittel ein gutes Preis-Wirkungsverhältnis, weisen kaum umweltrelevante Einschränkungen auf, sind nicht toxisch, wasserlöslich, es werden sehr geringe Mengen giftiger Gase bei der Verbrennung (wichtig für smoke und tox part 2, d.h. für IMO FTPC 2010 part 2) frei, und diese Flammschutzmittel sind sehr effizient hinsichtlich der eingesetzten Menge. Außerdem ergibt sich ein Synergieeffekt beim Einsatz der Kombination an Flammschutzmitteln umfassend Stickstoff und Phosphor.

Insbesondere kann es günstig sein, wenn das Flammschutzmittel halogenfrei ist.

Bei Halogenen entstehen bei der Verbrennung gesundheitsgefährliche Gase, die zudem noch schwer abbaubar sind (z.B. FCKW). Außerdem ist durch die part 2 Prüfung der Einsatz von halogenen Flammschutzmitteln limitiert (die Abgasmessung erlaubt nur sehr geringe Mengen an Halogenen). Entsprechend kann man den ökologischen Standards gerecht werden.

Außerdem verfügt der Lack über eine hohe Brillanz und Transparenz sowie über geringes Einfallverhalten, sodass diese Eigenschaften nach dem Auftrag auf das Furnier auch dort zum Tragen kommen.

Hinsichtlich der Schwer-Entflammbarkeit des Verbundelementes ist es günstig, wenn das zumindest einen Furnierelement die Anforderungen auf "Schwerentflammbarkeit" gemäß IMO 2010 FTPC Teil 5 erfüllt.

Ein Furnierelement, welches diese Anforderungen erfüllt, umfasst z.B. eine, zwei oder mehrere Lagen, wobei zumindest eine äußere Lage aus Furnier gebildet ist, und wobei das Furnierelement mit zumindest einem Furnier-Flammschutzmittel versehen ist, welches zumindest eine Furnier-Flammschutzmittel ein
a) anorganisches, beispielsweise anorganisch halogenfreies oder
b) organisches, vorzugsweise organisch halogenfreies Furnier-Flammschutzmittel ist.

Diese Anforderungen werden ebenso von einem Furnierelement erfüllt, welches mit zumindest einem Furnier-Flammschutzmittel, z.B. einem
a) anorganischen, beispielsweise anorganisch halogenfreien oder
b) organischen, vorzugsweise organisch halogenfreien Furnier-Flammschutzmittel versehen ist, wobei das zumindest eine Furnier-Flammschutzmittel derart gewählt und mit einer solchen Menge des Furnier-Flammschutzmittels versehen ist, dass bei einem Bestrahlen mit einer definierten Bestrahlungsstärke von 50KW/m² des mit dem Furnier-Flammschutzmittel versehenen Furnierelementes
   - der kritische Wärmefluss beim Verlöschen CFE ≥ 20 kW/m², und
   - die Wärme für anhaltendes Brennen Qsb ≥ 1,5 MJ/m², und
   - die freigesetzte Wärmemenge Qt ≤ 0,2 MJ, und
   - die maximale Wärmefreisetzungsrate Qp ≤ 1,0 kW
   beträgt.

Ein solches Furnierelement erfüllt die Anforderungen des IMO FTP Codes 2010, insbesondere des IMO FTP Codes 2010 Part 5 und die weiteren oben genannten Zertifizierungen.

Mit einem solchen zertifizierten Furnierelement ist eine Zulassung eines Gesamtaufbaus in Form eines eingangs erwähnten Verbundelementes möglich.

Vorzugsweise ist vorgesehen, dass zumindest die eine oder die mehreren Lagen aus Furnier oder genau nur die eine oder die mehreren Lagen aus Furnier mit dem zumindest einen Furnier-Flammschutzmittel versehen ist. Bevorzugt ist vorgesehen, dass genau nur die eine oder die mehreren Lagen Furnier mit dem oben beschriebenen Furnier-Flammschutzmittel versehen sind.

Das Furnier-Flammschutzmittel, mit welchem vorzugsweise die zumindest eine Lage aus Furnier oder genau die zumindest eine Lage aus Furnier versehen ist, ist vorzugsweise eine wasserbasierende Lösung oder liegt in Form einer wasserbasierenden Lösung vor.

Das Furnier-Flammschutzmittel, mit welchem vorzugsweise die zumindest eine Lage aus Furnier oder genau die zumindest eine Lage aus Furnier versehen ist, ist eine halogenfreie Lösung.

Vorzugsweise ist das Furnier-Flammschutzmittel eine anorganische Lösung.

Vorzugsweise ist das Furnier-Flammschutzmittel eine Lösung aus Stickstoff und/oder Phosphor.

Vorzugsweise ist die Lösung mit Additiven versetzt, welche eine gleichmäßige Benetzung der Holzfaser gewährleisten. Vorzugsweise handelt es sich bei diesen Additiven um Tenside (Netzmittel).

Weiters ist es von Vorteil, wenn der PH-Wert der Lösung zwischen 2,5 und 7, insbesondere zwischen 4 und 7 liegt. Dadurch ist die Lösung sehr neutral gegenüber Hölzern.

Bei einer konkreten Ausführungsform des zumindest einen Furnierelementes ist vorgesehen, dass die Aufnahmemenge des Furnier-Flammschutzmittels, insbesondere der anorganischen Lösung in der zumindest einen Lage aus Furnier zwischen 8 und 23 Gewichtsprozent, bezogen auf die Darrdichte des Furniers ist. Da Hölzer eine unterschiedliche Dichte aufweisen, muss die Aufnahmemenge bezogen auf das Gewicht immer gleich sein. Die Darrdichte wird als neutrale Größe verwendet, da sich die Dichte mit dem Wassergehalt im Holz ändert.

Bei der sogenannten Darrdichte handelt es sich um die Rohdichte von trockenem Holz. Die Aufnahmemenge ist abhängig von der Dichte und Zusammensetzung (Harze) des zu tränkenden Materials. Durch die Verbesserung der Benetzung durch Zusatz von entsprechenden Additiven kommt es auch zu einer verbesserten Aufnahme bis in die Holzzelle. Dadurch ist garantiert, dass Hölzer im Bereich von 350 - 1050 kg/m³ getränkt werden können und die oben angeführten Kriterien erfüllen.

Der Flammschutz weist vorzugsweise eine klare bis leicht trübe Konsistenz auf, so kommt es auch zu keiner Eigenverfärbung der Holzarten.

Ein erfindungsgemäßes Furnierelement besteht z.B. aus genau einer Lage aus Furnier. Bei einem anderen erfindungsgemäßen Furnierelement ist vorgesehen, dass das Furnierelement aus drei Lagen besteht, wobei eine äußere Lage aus Furnier gebildet ist, welche mit einer mittleren Schicht, welche eine Klebeschicht ist, auf eine dritte, äußere Schicht aufgeklebt sein kann.

Die dritte Schicht ist dabei beispielsweise ein Kaschiervlies.

Es muss nicht zwangsläufig ein Furnierelement mit einem Kaschiervlies verwendet werden. Das Vlies kann, aber muss nicht enthalten sein. Das Vlies erhöht die Flexibilität und Verarbeitbarkeit (3D Teile) des Furniers.

Weiters kann vorgesehen sein, dass die Klebeschicht, mit welcher die dritte, äußere Schicht mit der äußeren Lage aus Furnier verklebt ist, aus einem Klebefilm, vorzugsweise einem melamingetränkten Klebefilm gebildet ist. Melamin dient als Klebstoff verfügt über flammschützende Eigenschaften.

Dieser 3-lagige Aufbau besteht vorzugsweise aus einer Cellulose/Polyethylen (PE) Kaschierung, die mit einem Klebefilm, vorzugsweise einem melamingetränkten Klebefilm auf die Furnierlage aufgeklebt wird. Der Klebefilm härtet zur Klebeschicht aus.

Die dritte, äußere Schicht, vorzugsweise das Kaschiervlies, ist mit einem Flammschutzmittel versehen, vorzugsweise getränkt.

Dieses Flammschutzmittel kann identisch sein mit dem Furnier-Flammschutzmittel für das Furnier, vorzugsweise ist allerdings vorgesehen, dass das Flammschutzmittel für das Kaschiervlies auf einer Stickstoff-Phosphorverbindung basiert, vorzugsweise einer Lösung aus anorganischen Salzen.

Das Kaschiervlies wird vor dem Verkleben mit einem, vorzugsweise weiteren, Flammschutzmittel getränkt. Dieses Flammschutzmittel basiert wiederum auf einer Stickstoff/Phosphorverbindung, ist aber in der Regel nicht identisch zu dem Flammschutzmittel, mit welchem das Furnier versehen ist. Bei dem Flammschutzmittel für das Kaschiervlies handelt es sich um eine Lösung anorganischer Salze, die beim Erhitzen Gase freisetzen, die Sauerstoff verdrängen und so eine brandhemmende Wirkung entfalten.

Die Lage aus Furnier wird dem dafür vorgesehenen Furnier-Flammschutzmittel ebenfalls vor dem Verkleben versehen, vorzugsweise getränkt, und wenn das Furnier und das Kaschiervlies ausreichend getrocknet sind, erfolgt das Verkleben mit dem Klebefilm.

Die Furnierlagen werden mit dem oben beschriebenen, für das Furniermaterial vorgesehenen Furnier-Flammschutzmittel versehen, z.B. getränkt, und, sobald diese ausreichend getrocknet sind, mit einem entsprechenden Kleber miteinander verklebt.

Vorzugsweise ist vorgesehen, dass die zumindest eine Klebeschicht von einem Kleber gebildet ist, welcher einen Polykondensationsklebstoff beinhaltet oder aus einem Polykondensationsklebstoff besteht. Dieser Kleber kann, muss aber nicht mit einem Flammschutz versehen sein.

Weiters ist vorzugsweise vorgesehen, dass bei dem 3-lagigen Furnierelement die zumindest eine Furnier-Lage aus Echt-Holz bestehen.

Unter dem Begriff Echtholz versteht man natürlich gewachsenes Holz. Der Begriff "Echtholz" dient zur Unterscheidung von Holzimitat bzw. auch Holzwerkstoffen.

Unter dem Begriff Echtholz werden auch Furniere verstanden, die aus unterschiedlichen Furnierstreifen zusammengesetzt werden, wobei jeder Furnierstreifen natürlich gewachsenes Holz ist.

Bei einer bevorzugten Ausführungsform der Erfindung ist vorgesehen, dass die Dichte des Furnier-Materials, aus welchen die zumindest eine Furnier-Lage besteht, insbesondere die Holzdichte, z.B. die Rohdichte des Holzes, in einem Bereich von 350 - 1200 kg/m³, vorzugsweise in einem Bereich von 400 - 900 kg/m³ liegt.

Weiters ist es von Vorteil, wenn das Furnier-Material, aus welchem die zumindest eine Furnier-Lage besteht, einen organischen Gehalt von 70 % bis 99 % aufweist. Die Angaben der Gewichtsprozente beziehen sich dabei auf eine darrtrockene Furnier. Holz hat organische (brennbare) und anorganische (nicht brennbare Anteile). Je mehr nicht brennbare Anteile enthalten sind, desto schwieriger ist das Furnier zu tränken.

Weiters ist typischerweise vorgesehen, dass die Dicke einer Lage aus Furnier ≤ 2,5 mm ist. Eine Untergrenze für die Dicke einer Lage aus Furnier liegt bei ca. 0,25mm. Typischerweise liegt die Dicke für eine Lage aus Furnier zwischen 0,35 - 0,65 mm.

Beispielsweise weist ein Furnierelement (Furnier, Klebeschicht, Kaschiervlies) bei einer Dicke des Furniers von ca. 0,35 mm eine Dicke von ca. 0,65mm auf.

Im Folgenden ist die Erfindung an Hand der Zeichnung näher erörtert. In dieser zeigt
Fig. 1 ein erfindungsgemäßes Verbundelement,
Fig. 1a ein weiteres erfindungsgemäßes Verbundelement,
Fig. 2 einen beispielhaften schematischen Schichtaufbau eines 3-lagigen, vorzugsweise bei einem Verbundelemente gemäß Figur 1 verwendeten Furnierelementes mit einer Lage aus Furnier,
Fig. 3 einen beispielhaften schematischen Schichtaufbau eines 3-lagigen, vorzugsweise bei einem Verbundelemente gemäß Figur 1 verwendeten Furnierelementes, welches zwei Lagen aus Furnier umfasst, und
Fig. 4 einen beispielhaften schematischen Schichtaufbau eines 5-lagigen, vorzugsweise bei einem Verbundelemente gemäß Figur 1 verwendeten Furnierelementes, welches drei Lagen aus Furnier umfasst.

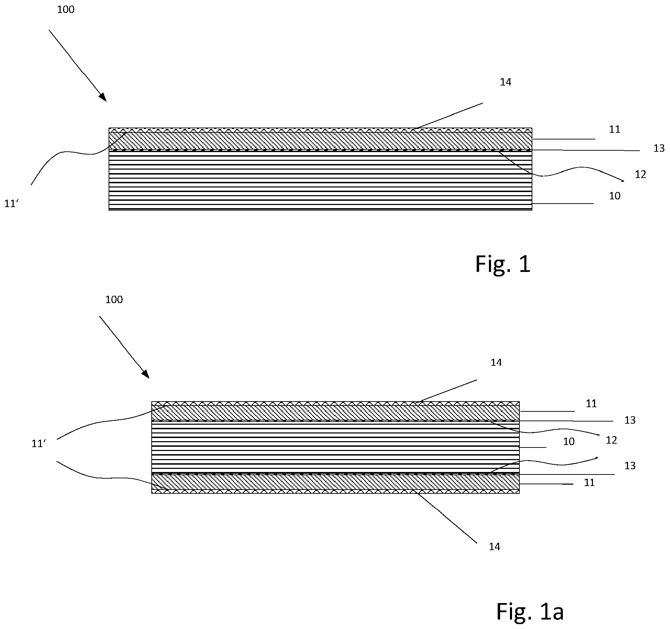

Figur 1 zeigt ein Verbundelement 100, welches ein Kernelement 10 umfasst, welches Kernelement 10 aus einem nicht brennbaren Material gebildet ist. Weiters umfasst das Verbundelement 100 eine Deckschicht 11, welche an einer Außenfläche 12 des Kernelementes 10 angebracht ist, wobei die Deckschicht 11 aus einem Furnierelement 11 gebildet ist. Das Furnierelement 11 bzw. die Deckschicht 11 ist dabei mit einer Klebeschicht 13 mit der Außenfläche 12 des Kernelementes 10 verbunden ist. Dazu wird üblicherweise ein Kleber als Klebefilm (Nassauftrag) aufgetragen, welcher als Klebeschicht aushärtet. An ihrer Außenfläche 11' ist das Furnierelement, vorzugsweise vollflächig, mit einer transparenten Lackschicht 14 versehen. Auf diese Weise ist das gesamte zumindest einen Furnierelement gegen Umwelteinflüsse etc. geschützt und verfügt zusätzlich über eine hochwertige, bei entsprechendem Lack glänzende bzw. hochglänzende optische Erscheinung.

Figur 1a zeigt ein weiteres Verbundelement 100 gemäß der Erfindung, mit dem Unterschied, dass an dem Kernelement 10 zu beiden Seiten eine Deckschicht in Form eines Furnierelementes 11, welches vorzugsweise vollflächig mit einer Lackschicht 14 versehen ist, vorgesehen ist. Furnierelement, Klebeschicht und Lackschicht können sich auf den beiden Seiten unterscheiden, sind aber bevorzugt identisch.

Im Folgenden wird der Aufbau des Verbundelementes 100 im Detail beschrieben, wobei die Ausführungen, ohne dass dies im Folgenden jeweils gesondert erwähnt ist, für beide Ausführungsformen gemäß Figur 1 und 1a gilt.

### Kernelement

Um die an das Verbundelement 100 gestellten Anforderungen in Hinblick auf Schwer-Entflammbarkeit zu erfüllen, ist es von Vorteil, wenn das Kernelement 10 derart ausgebildet ist, dass es die Brandprüfung nach IMO FTP Code Part 1 besteht. Das Kernelement 10 bildet die Trägerplatte für das eine Furnierelement 11 (Figur 1) oder für beide Furnierelemente 11 (Figur 1a).

Beispielsweise ist vorgesehen, dass das Kernelement 10 eine Blähglasplatte ist. Eine solche Blähglasplatte besteht die Brandprüfung nach IMO FTP Code Part 1.

Es kann auch vorgesehen sein, dass das Kernelement 10 eine metallische Platte ist. Mit Vorteil ist dabei vorgesehen, dass die metallische Platte eine Aluwabenplatte ist. Eine metallische Platte besteht die Brandprüfung nach IMO FTP 2010 Code Part 1. Eine Aluwabenplatte hat zusätzlich den Vorteil, dass sie leicht ist.

### Klebeschicht

Bei einer vorteilhaften Ausführungsform der Verbundelemente gemäß Figur 1 und 1a ist vorgesehen, dass die eine oder die beiden Klebeschichten 13 aus einem Klebstoff oder einer Klebstoffmischung gebildet ist/sind, welcher/welche aus einem Dispersionsklebstoff gebildet ist oder diesen enthält. Dabei ist bevorzugt vorgesehen, dass die zumindest eine Klebeschicht 13 aus einem Klebstoff oder einer Klebstoffmischung gebildet ist, welcher/welche aus einem Polyvinylacetat gebildet ist oder diesen enthält. PVAc (Polyvinylacetat) Klebstoffe gehören zur Gruppe der Dispersionsklebstoffe.

Alternativ oder zusätzlich kann vorgesehen sein, dass die zumindest eine Klebeschicht 13 aus einem Klebstoff oder einer Klebstoffmischung gebildet ist, welcher/welche aus einem Polyadditionsklebstoff gebildet ist oder diesen enthält. Dabei ist bevorzugt vorgesehen, dass der Polyadditionsklebstoff ein PUR (Polyurethane) Klebstoff ist.

Wiederum alternativ oder zusätzlich kann vorgesehen sein, dass die zumindest eine Klebeschicht 13 aus einem Klebstoff oder einer Klebstoffmischung gebildet ist, welcher/welche aus einem Polykondensationsklebstoff gebildet ist oder diesen enthält.

Es kann dabei vorgesehen sein, dass die zumindest eine Klebstoffschicht aus genau einem Klebstoff bzw. genau einer Klebstoffmischung gebildet ist. Prinzipiell sind aber auch Kombinationen von zwei oder mehreren bzw. allen diesen Klebstoffen möglich, solche Kombinationen sind aber nicht für eine positive Brandprüfung erforderlich.

Vorzugsweise ist vorgesehen, dass der Klebstoff bzw. die Klebstoffmischung in einer Auftragsmenge von 50 - 200 g/m², vorzugsweise von 75 - 150 g/m² aufgebracht ist.

Die zumindest eine Klebeschicht bzw. die Klebeschichten, insbesondere der Klebstoff oder die Klebstoffmischung, kann frei von Flammschutzmitteln sein.

### Lack

Die eine oder die beiden Lackschicht(en) 14 ist/sind aus einem transparenten Lack gebildet, welcher für den Einsatz auf Echtholz geeignet ist.

Beispielsweise ist vorgesehen, dass die zumindest eine Lackschicht 14 einen Lack bzw. ein Lacksystem enthält, der/das auf einem Polymersystem basiert. Insbesondere ist es dabei von Vorteil, wenn das Polymersystem ein Isocyanat-vernetzendes Lacksystem ist. Beispielsweise ist vorgesehen, dass das Lacksystem ein Polyurethan-Lacksystem ist.

Es kann auch vorgesehen sein, dass das Polymersystem Acrylat enthält oder auf Acrylat basiert.

Die Schichtstärke der zumindest einen Lackschicht 14 liegt in einem Bereich von 250 - 1000 µm, beispielsweise von 250 - 900µm, vorzugsweise 300 - 800µm, insbesondere 500 - 800µmliegt.

Oftmals ist dabei vorgesehen, dass die zumindest eine Lackschicht 14 aus zwei oder mehreren Unter-Schichten aufgebaut ist, welche Unter-Schichten aus identischen oder zumindest teilweise unterschiedlichen Lacken bestehen. Dickere Lackschichten von (z.B. 1000µm) können oftmals nicht in einer Applikation aufgetragen werden und werden in Unter-Schichten aufgebaut (typischerweise mit jeweils ca. 100 - 200 µm Dicke). Dabei können alle Unter-Schichten aus demselben (identischen) Lack/Lacksystem aufgebaut sein, oder eine oder mehrere Unter-Schichten bestehen aus bestehen aus einem anderen Lack/Lacksystem als der Rest der Unter-Schichten. Es ist allerdings auch möglich, dass jede Unter-Schicht aus einem anderen Lacke/Lacksystem gebildet ist. Die Unter-Schichten erlauben es, dass man die Lacke bzw. Lacksysteme wechselt. Beispielsweise ist es bei tropischen Hölzern günstig bzw. notwendig, zuerst einen Isoliergrund aufzutragen, um Holzinhaltsstoffe zu sperren (z.B. ein PU (Polyurethan) System, isocyanat-vernetzend). Danach wird ein Lack mit sehr viel Masse aufgetragen, um schnell Schichtdicke aufzubauen. Dieser ist vorzugsweise elastisch und vorzugsweise leicht schleifbar (z.B.: PU System). Als Finish wird mit Vorteil eine sehr harte Lackschicht aufgebracht, welche kratzfest und polierbar ist (z.B. Acrylat/Acrylharz). Bei den unterschiedlichen Lacken/ Lacksystemen für die Unter-Schichten der Lackschicht handelt sich vorzugsweise um ähnliche Systeme mit unterschiedlichen physikalischen Eigenschaften.

Weiters ist der die zumindest eine Lackschicht 14 bildende Lack bzw. Lacksystem mit einem oder mehreren Flammschutzmitteln versehen. Ein Lack besteht aus mehreren Komponenten (z.B. Komponenten A, B und Verdünnung), diese Komponenten können je nach Bedarf im Mischungsverhältnis angepasst werden. Diese Komponenten werden im Gesamten als System bzw. Lacksystem bezeichnet.

Der Lack bzw. das Lacksystem ist dabei bereits vor dem Aufbringen auf das Furnier mit dem Flammschutz versehen. Bei einer Variante ist das Flammschutzmittel ein organisches oder anorganisches Flammschutzmittel.

Beispielsweise ist der Lack in einem Sprühverfahren oder Walzverfahren aufgetragen.

Beispielsweise kann auch vorgesehen sein, dass der Flammschutzmittelanteil 15 - 25% Gewichtsprozent der zumindest einen, mit Flammschutzmittel versehenen Lackschicht beträgt. Ein zu hoher Flammschutzmittelanteil verschlechtert die Transparenz, während ein zu geringer Anteil die Eigenschaften in Hinblick auf Feuerbeständigkeit verschlechtert. Die obigen Werte liefern einen guten Kompromiss.

Weiters kann es zweckmäßig sein, wenn das Flammschutzmittel auf einer Phosphor-Stickstoffbasis basiert.

Insbesondere kann es günstig sein, wenn das Flammschutzmittel halogenfrei ist.

Außerdem verfügt der Lack über eine hohe Brillanz und Transparenz sowie über geringes Einfallverhalten, sodass diese Eigenschaften nach dem Auftrag auf das Furnier auch dort zum Tragen kommen.

### Furnierelement

Bevorzugte Ausführungsformen von Furnierelementen 11, die bei einem erfindungsgemäßen Verbundelement 100 zum Einsatz kommen können, sind im Folgenden beschrieben. Bevorzugt sind bei einem Verbundelement 100 nach Figur 1a beide Deckschichten 11 aus identischen Furnierelementen 11 gebildet, es können aber auch unterschiedliche Furnierelemente zum Einsatz kommen.

Hinsichtlich der Schwer-Entflammbarkeit des Verbundelementes ist es günstig, wenn das zumindest einen Furnierelement 11 die Anforderungen auf "Schwerentflammbarkeit" gemäß IMO 2010 FTPC Teil 5 erfüllt.

Grundsätzlich kann vorgesehen sein, dass das eine oder die beiden Furnierelemente 11 lediglich aus einer Schicht Furnier-Holz, vorzugsweise einer Echtholz-Schicht bestehen.

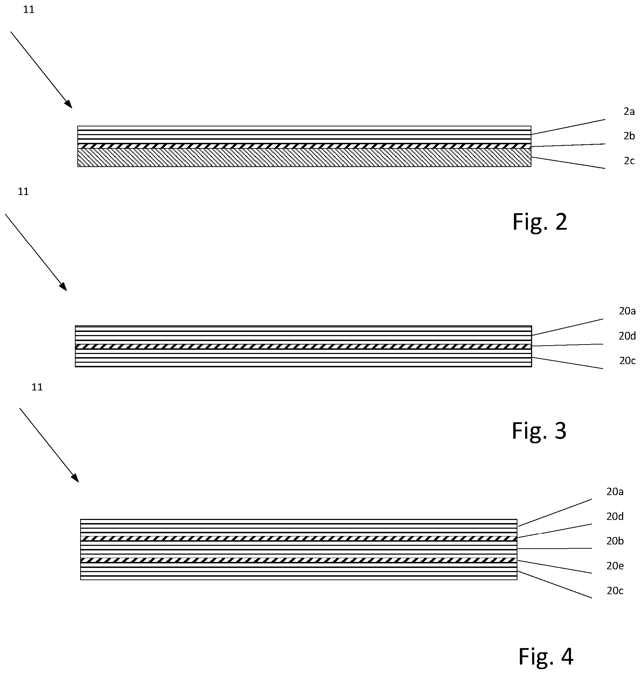

Figur 2 zeigt ein weiteres Beispiel eines vorteilhaften Furnierelementes 11 (d.h. einen Ausschnitt davon) mit einem dreilagigen Aufbau.

Dabei ist dies äußere Lage 2a aus Furnier gebildet ist, welche mit einer mittleren Schicht 2b, welche eine Klebeschicht ist, auf eine dritte, äußere Schicht 2c aufgeklebt ist.

Die Furnier-Lage 2a besteht dabei aus Holz, insbesondere Echt-Holz. Die Dichte des Furnier-Materials, aus welchen diese eine Furnier-Lage 2a besteht, insbesondere die Holzdichte, z.B. die Rohdichte des Holzes, liegt in einem Bereich von 350 - 1200 kg/m³, vorzugsweise in einem Bereich von 400 - 900 kg/m³.

Das Furnier-Material, d.h. das Echt-Holz, aus welchem die Furnier-Lage 2a besteht, weist einen organischen Gehalt von vorzugsweise 70 % bis 99 % auf. Die Angaben der Gewichtsprozente beziehen sich dabei auf eine darrtrockene Furnier.

Das Furnier ist vorzugsweise mit einem Furnier-Flammschutzmittel versehen, wie dies weiter unten noch im Detail erörtert wird. Holz hat organische (brennbare) und anorganische (nicht brennbare Anteile). Je mehr nicht brennbare Anteile enthalten sind, desto schwieriger ist das Furnier mit dem Furnier-Flammschutzmittel zu tränken.

Typischerweise ist die Dicke der Lage 2a aus Furnier ≤ 2,5 mm. Eine Untergrenze für die Dicke einer Lage aus Furnier liegt bei ca. 0,35mm. Typischerweise liegt die Dicke für eine Lage aus Furnier zwischen 0,35 - 0,65 mm.

Das Furnierelement 11 (Furnier 2a, Klebeschicht 2b, Kaschiervlies 2c) weist bei einer Dicke des Furnier 2a von ca. 0,35 mm eine Dicke von ca. 0,65mm auf.

Diese Furnier 2a ist mit einer Klebeschicht 2b mit der dritten Schicht 2c verklebt, wobei es sich in dem gezeigten Beispiel bei der dritten Schicht 2c um ein Kaschiervlies handelt.

Die Klebeschicht 2b, mit welcher die dritte, äußere Schicht 2c mit der äußeren Lage 2a aus Furnier verklebt ist, aus einem Klebefilm, vorzugsweise einem melamingetränkten Klebefilm gebildet ist.

Die dritte Schicht/Lage 2c besteht aus einer Cellulose/Polyethylen (PE) Kaschierung, die mit einem Klebefilm, vorzugsweise einem melamingetränkten Klebefilm auf die Furnierlage aufgeklebt wird. Der Klebefilm härtet zur Klebeschicht 2b aus.

Vor dem Verkleben wird das Furnier 2a mit dem entsprechenden Furnier-Flammschutzmittel versehen, vorzugsweise getränkt, wie dies noch beschrieben wird. Ebenso wird das Kaschiervlies 2c, wie anschließend beschrieben, mit dem dazu vorgesehenen Flammschutzmittel versehen, vorzugsweise getränkt. Wenn Furnier 2a und Kaschiervlies ausreichend getrocknet sind, werden diese miteinander verklebt.

Das Kaschiervlies 2c ist mit einem (weiteren) Flammschutzmittel versehen, vorzugsweise getränkt. Dieses Flammschutzmittel kann identisch sein mit dem Furnier-Flammschutzmittel für das Furnier, vorzugsweise ist diese aber unterschiedlich und es ist vorgesehen, dass das Flammschutzmittel für das Kaschiervlies auf einer Stickstoff-Phosphorverbindung basiert, vorzugsweise einer Lösung aus anorganischen Salzen.

Das Kaschiervlies 2c wird vor dem Verkleben mit diesem, vorzugsweise weiteren, Flammschutzmittel getränkt. Bei dem Flammschutzmittel für das Kaschiervlies 2c handelt es sich wie oben beschrieben um eine Lösung anorganischer Salze, die beim Erhitzen Gase freisetzen, die Sauerstoff verdrängen und so eine brandhemmende Wirkung entfalten.

Das Furnierelement 11 ist mit zumindest einem Furnier-Flammschutzmittel versehen ist, welches zumindest eine Furnier-Flammschutzmittel ein
a) anorganisches, vorzugsweise anorganisch halogenfreies oder
b) organisches, vorzugsweise organisch halogenfreies Flammschutzmittel ist.

Bei dem gezeigten Beispiel ist das Furnier-Flammschutzmittel eine wasserbasierende Lösung ist oder in Form einer wasserbasierenden Lösung vorliegt. Mit diesem Flammschutzmittel ist die Lage 2a aus Furnier versehen. Der PH-Wert der Lösung liegt vorzugsweise zwischen 2,5 und 7, insbesondere zwischen 4 und 7, wodurch die Lösung sehr neutral gegenüber Hölzern. Beispielsweise ist das Furnier-Flammschutzmittel eine halogenfreie Lösung. Alternativ oder zusätzlich kann vorgesehen sein, dass das Furnier-Flammschutzmittel eine anorganische Lösung ist. Ebenso alternativ oder zusätzlich kann vorgesehen sein, dass das Furnier-Flammschutzmittel eine Lösung aus Stickstoff und/oder Phosphor ist.

Die Lösung ist vorzugsweise mit Additiven versetzt, welche eine gleichmäßige Benetzung der Holzfaser gewährleisten. Vorzugsweise handelt es sich bei den Additiven um Tenside (Netzmittel).

Außerdem ist mit Vorteil vorgesehen, dass die Aufnahmemenge des Flammschutzmittels, insbesondere der anorganischen Lösung in der zumindest einen Lage 2a aus Furnier zwischen 8 und 23 Gewichtsprozent, bezogen auf die Darrdichte des Furniers ist.

Bei der sogenannten Darrdichte handelt es sich um die Rohdichte von trockenem Holz. Die Aufnahmemenge ist abhängig von der Dichte und Zusammensetzung (Harze) des zu tränkenden Materials. Durch die Verbesserung der Benetzung durch Zusatz von entsprechenden Additiven kommt es auch zu einer verbesserten Aufnahme bis in die Holzzelle. Dadurch ist garantiert, dass Hölzer im Bereich von 350 - 1050 kg/m³ getränkt werden können und die oben angeführten Kriterien erfüllen.

Der Flammschutz weist vorzugsweise eine klare bis leicht trübe Konsistenz auf, so kommt es auch zu keiner Eigenverfärbung der Holzarten.

Figur 3 zeigt ein weiteres Beispiel eines Furnierelementes 11. Dieses besteht aus zwei äußeren Schichten 20a, 20b, die jeweils von einer Furnierlage gebildet sind, und einer Klebeschicht, welche die beiden Furnierlagen 20a, 20b miteinander verbindet. Das Furniermaterial ist mit einem wie oben schon beschriebenen Furnier-Flammschutzmittel versehen, und die beiden Furnierlagen sind mit einer Klebeschicht 20d verklebt. Die Klebeschicht ist vorzugsweise von einem Kleber gebildet, welcher einen Polykondensationsklebstoff beinhaltet oder aus einem Polykondensationsklebstoff besteht.

Figur 4 zeigt noch einen Aufbau, bei welchem neben den beiden äußeren Schichten in Form einer Furnierlage 20a, 20c noch eine mittlere Schicht aus einer Furnierlage 20b vorgesehen ist. Die Furnierlagen 20a, 20b sowie 20b, 20c sind mit einer Klebeschicht miteinander verklebt, welche Klebeschichten vorzugsweise von einem Kleber gebildet sind, welcher einen Polykondensationsklebstoff beinhaltet oder aus einem Polykondensationsklebstoff besteht. Unterschiedliche Klebeschichten können, müssen aber nicht einen unterschiedlichen Klebstoff aufweisen. Die Furnierlagen 20a, 20b, 20c werden vor dem Verkleben mit einem Flammschutzmittel wie zu Figur 2 bereits beschrieben versehen.

Mit den oben an Hand von Figur 2 - 4 beschriebenen Aufbauen kann ein Furnierelement erzielt werden, bei welchem bei einem Bestrahlen mit einer definierten Bestrahlungsstärke von 50KW/m² der kritischer Wärmefluss beim Verlöschen CFE ≥ 20 kW/m²,
- die Wärme für anhaltendes Brennen Qsb ≥ 1,5 MJ/m²,
- die freigesetzte Wärmemenge Qt ≤ 0,2 MJ, und
- die maximale Wärmefreisetzungsrate Qp ≤ 1,0 kW
beträgt.

Ein solches Furnierelement erfüllt die Anforderungen des IMO FTP Codes 2010, insbesondere des IMO FTP Codes 2010 Part 5 und die weiteren oben genannten Zertifizierungen.

Mit einem solchen zertifizierten Furnierelement ist eine Zulassung eines Gesamtaufbaus in Form eines eingangs erwähnten Verbundelementes 100 möglich.

Das Furnier-Flammschutzmittel wird z.B. im Tauchverfahren oder im Kesseldruckverfahren (Autoklav) in das Furnier, welches die Lage 2a bildet, eingebracht. Der Prozess der Tränkung im Tauchverfahren dauert typischerweise 12 Stunden, der Prozess der Kesseltränkung typischerweise 2 - 4 Stunden.

Im Prozess kommt es dabei zu keinen Verfärbungen der Furnier oder Auskristallisierungen im eingesetzten Zustand.

Hauptverantwortlich dafür ist die beschriebene, verwendete Art des Flammschutzmittels für das Furnier sowie die Konzentration beim Tränkprozess. Der Flammschutz wird üblicherweise mit Wasser verdünnt. Erhöht man die Konzentration des Flammschutzmittels, kann es zu Ausblutungen kommen, verringert man die Konzentration, kann der Flammschutz nicht mehr gewährleistet sein. Der verwendete Flammschutz dringt in die Zellwand des Holzes ein und kann somit schwerer ausgewaschen werden. Haftet der Flammschutz nur an der Oberfläche, sind Probleme wie schlechte Haftung oder Ausblutungen deutlich zu erkennen. Halogenisierte Flammschutzmittel hingegen zeigen auch ein sehr hygroskopisches Verhalten, das in Kontakt mit Wasser zu fleckigen Rändern führt.

Außerdem ist das erfindungsgemäß behandelte Furnier mit herkömmlichen Klebstoffsystemen und Lacksystemen verarbeitbar. Andere flammgeschützte Furniere zeigen immer wieder Haftungsprobleme sowie Auskristallisierungen oder Verfärbungen."

Bei der Prüfung auf "Schwerentflammbarkeit" werden die Materialien einer definierten Bestrahlungsstärke (50KW/m²) ausgesetzt, die von einem Wärmestrahler erzeugt wird. Während der Tests messen und registrieren die Prüfer die Entzündungszeit, die Flammenausbreitung (CFE), das Verlöschen der Flammen und die Wärmefreisetzung (Qₜ und Qₚ). Aus den detektierten Werten errechnet sich dann die Geschwindigkeit der Flammenausbreitung (Q_{sb}).

Das erfindungsgemäße Furnierelement erfüllt die Anforderungen auf "Schwerentflammbarkeit" gemäß IMO 2010 FTPC Teil 5. Außerdem dürfen die Materialien obendrein im Falle eines Brandes weder außergewöhnlich große Rauchmengen erzeugen, noch giftige Stoffe freisetzen. Dies ist gemäß IMO 2010 FTPC Teil 2 nachzuweisen. Davon ausgenommen sind Materialien, deren gesamte Wärmefreisetzung Qₜ ≤ 0,2 MJ und maximale Wärmefreisetzungsrate Qₚ ≤ 1,0 kW betragen; diese Bedingungen werden von dem erfindungsgemäßen Furnierelement erfüllt, sodass eine Prüfung gemäß Part 2 nicht notwendig ist.

## Patentansprüche

1. Verbundelement (100), umfassend
ein Kernelement (10), zumindest eine Deckschicht, welche an zumindest einer Außenfläche (12) des Kernelementes (10) angebracht ist, wobei die zumindest eine Deckschicht aus einem Furnierelement (11) gebildet ist, und
zumindest eine Klebeschicht (13), mittels welcher die zumindest eine Deckschicht mit der zumindest einen Außenfläche (12) des Kernelementes (10) verbunden ist, wobei
das Kernelement (10) aus einem nicht brennbaren Material gebildet ist, und das zumindest eine Furnierelement (11) zumindest bereichsweise an ihrer Außenfläche (11') mit zumindest einer transparenten Lackschicht (14) versehen ist,
**dadurch gekennzeichnet, dass**
das Furnierelement genau aus einer Lage Furnier besteht oder das Furnierelement aus zwei, drei oder mehr Lagen aus Furnier gebildet ist, wobei jeweils zwei benachbarte Lagen aus Furnier mit einer Klebeschicht miteinander verbunden sind, und
wobei der die zumindest eine Lackschicht bildende Lack bzw. Lacksystem mit einem oder mehreren Flammschutzmitteln versehen ist, wobei die Schichtstärke der zumindest einen Lackschicht (14) in einem Bereich von 250 - 1000 µm, beispielsweise von 250 - 900µm, vorzugsweise 300 - 800µm, insbesondere 500 - 800gm liegt.

2. Verbundelement nach Anspruch 1, **dadurch gekennzeichnet, dass** die Außenfläche (11') des zumindest einen Furnierelementes (11) vollflächig mit der Lackschicht (14) versehen ist.

3. Verbundelement nach Anspruch 1 oder 2, **dadurch gekennzeichnet, dass** das Kernelement (10) derart ausgebildet ist, dass es die Brandprüfung nach IMO FTP Code Part 1 besteht.

4. Verbundelement nach einem der Ansprüche 1 bis 3, **dadurch gekennzeichnet, dass** das Kernelement eine Blähglasplatte ist, oder das Kernelement (10) eine metallische Platte ist, wobei vorzugsweise die metallische Platte eine Aluwabenplatte ist.

5. Verbundelement nach einem der Ansprüche 1 bis 4, **dadurch gekennzeichnet, dass** die zumindest eine Klebeschicht (13) aus einem Klebstoff oder einer Klebstoffmischung gebildet ist, welcher/welche aus einem Dispersionsklebstoff gebildet ist oder diesen enthält, wobei vorzugsweise die zumindest eine Klebeschicht (13) aus einem Klebstoff oder einer Klebstoffmischung gebildet ist, welcher/welche aus einem Polyvinylacetat gebildet ist oder diesen enthält.

6. Verbundelement nach einem der Ansprüche 1 bis 5, **dadurch gekennzeichnet, dass** die zumindest eine Klebeschicht (13) aus einem Klebstoff oder einer Klebstoffmischung gebildet ist, welcher/welche aus einem Polyadditionsklebstoff gebildet ist oder diesen enthält, wobei vorzugsweise der Polyadditionsklebstoff ein PUR (Polyurethane) Klebstoff ist.

7. Verbundelement nach einem der Ansprüche 1 bis 6, **dadurch gekennzeichnet, dass** die zumindest eine Klebeschicht (13) aus einem Klebstoff oder einer Klebstoffmischung gebildet ist, welcher/welche aus einem Polykondensationsklebstoff gebildet ist oder diesen enthält.

8. Verbundelement nach einem der Ansprüche 5 bis 7, **dadurch gekennzeichnet, dass** der Klebstoff bzw. die Klebstoffmischung in einer Auftragsmenge von 50 - 200 g/m², vorzugsweise von 75 - 150 g/m² aufgebracht ist.

9. Verbundelement nach einem der Ansprüche 1 bis 8, **dadurch gekennzeichnet, dass** die zumindest eine Lackschicht (14) einen Lack bzw. ein Lacksystem enthält, der/das auf einem Polymersystem basiert, wobei insbesondere das Polymersystem ein Isocyanat-vernetzendes Lacksystem ist, und wobei insbesondere das Lacksystem eine Polyurethan-Lacksystem ist, wobei vorzugsweise das Polymersystem Acrylat enthält oder auf Acrylat basiert.

10. Verbundelement nach einem der Ansprüche 1 bis 9, **dadurch gekennzeichnet, dass** die zumindest eine Lackschicht (14) aus zwei oder mehreren Unter-Schichten aufgebaut ist, welche Unter-Schichten aus identischen oder zumindest teilweise unterschiedlichen Lacken bestehen.

11. Verbundelement nach einem der Ansprüche 1 bis 10, **dadurch gekennzeichnet, dass** das Flammschutzmittel ein organisches oder anorganisches Flammschutzmittel ist.

12. Verbundelement nach Anspruch 11, **dadurch gekennzeichnet, dass** der Flammschutzmittelanteil 15 - 25% Gewichtsprozent der zumindest einen, mit Flammschutzmittel versehenen Lackschicht beträgt.

13. Verbundelement nach Anspruch 11 oder 12, **dadurch gekennzeichnet, dass** das Flammschutzmittel halogenfrei ist.

14. Verbundelement nach einem der Ansprüche 1 bis 13, **dadurch gekennzeichnet, dass** das zumindest einen Furnierelement (11) die Anforderungen auf "Schwerentflammbarkeit" gemäß IMO 2010 FTPC Teil 5 erfüllt.

15. Verbundelement nach einem der Ansprüche 1 bis 14, **dadurch gekennzeichnet, dass** zumindest die eine oder die mehreren Lagen (2a; 20a, 20b, 20c) des zumindest einen Furnierelementes (11) aus Furnier oder genau nur die eine oder die mehreren Lagen (2a; 20a, 20b, 20c) aus Furnier mit zumindest einem Furnier-Flammschutzmittel versehen ist, und wobei das zumindest eine Furnierelement (11) mit zumindest einem Furnier-Flammschutzmittel versehen ist, welches zumindest eine Furnier-Flammschutzmittel ein
a) anorganisches, beispielsweise anorganisch halogenfreies oder
b) organisches, vorzugsweise organisch halogenfreies Furnier-Flammschutzmittel ist.

16. Verbundelement nach Anspruch 15, **dadurch gekennzeichnet, dass** das Furnier-Flammschutzmittel eine wasserbasierende Lösung ist oder in Form einer wasserbasierenden Lösung vorliegt, wobei vorzugsweise die Lösung mit Additiven versetzt ist, welche eine gleichmäßige Benetzung der Holzfaser gewährleisten, und wobei insbesondere der PH-Wert der Lösung zwischen 2,5 und 7, insbesondere zwischen 4 und 7 liegt.

17. Verbundelement nach Anspruch 15 oder 16, **dadurch gekennzeichnet, dass** das Furnier-Flammschutzmittel eine halogenfreie Lösung ist.

18. Verbundelement nach einem der Ansprüche 15 bis 17, **dadurch gekennzeichnet, dass** die Aufnahmemenge des Furnier-Flammschutzmittels, insbesondere der anorganischen Lösung in der zumindest einen Lage (2a; 20a, 20b, 20c) aus Furnier zwischen 8 und 23 Gewichtsprozent, bezogen auf die Darrdichte des Furniers ist.

19. Verbundelement nach einem der Ansprüche 15 bis 18, **dadurch gekennzeichnet, dass** die zumindest eine Klebeschicht (20d, 20e) von einem Kleber gebildet ist, welcher einen Polykondensationsklebstoff beinhaltet oder aus einem Polykondensationsklebstoff besteht.

20. Verbundelement nach einem der Ansprüche 15 bis 19, **dadurch gekennzeichnet, dass** die Dichte des Furnier-Materials, aus welchen die zumindest eine Furnier-Lage (2a; 20a, 20b, 20c) besteht, insbesondere die Holzdichte, z.B. die Rohdichte des Holzes, in einem Bereich von 350 - 1200 kg/m³, vorzugsweise in einem Bereich von 400 - 900 kg/m³ liegt.

21. Verbundelement nach einem der Ansprüche 15 bis 20, **dadurch gekennzeichnet, dass** die Dicke einer Lage (2a; 20a, 20b, 20c) aus Furnier ≤ 2,5 mm ist.

## Claims

1. Composite element (100), comprising
a core element (10), at least one cover layer attached to at least one outer surface (12) of said core element (10), said at least one cover layer being formed of a veneer element (11), and
at least one adhesive layer (13), by means of which the at least one cover layer is connected to the at least one outer surface (12) of the core element (10), wherein
the core element (10) is formed from a non-combustible material, and the at least one veneer element (11) is provided at least in regions on its outer surface (11') with at least one transparent lacquer layer (14),
**characterized in that**
the veneer element consists of exactly one layer of veneer or the veneer element is formed from two, three or more layers of veneer, in each case two adjacent layers of veneer being bonded to one another with an adhesive layer, and
wherein the lacquer or lacquer system forming the at least one lacquer layer is provided with one or more flame retardants, wherein the layer thickness of the at least one lacquer layer (14) is in a range from 250 - 1000 µm, for example from 250 - 900µm, preferably 300 - 800µm, in particular 500 - 800µm.

2. Composite element according to claim 1, **characterized in that** the outer surface (11') of the at least one veneer element (11) is provided with the lacquer layer (14) over the entire surface.

3. Composite element according to claim 1 or 2, **characterized in that** the core element (10) is designed to pass the fire test according to IMO FTP Code Part 1.

4. Composite element according to any one of claims 1 to 3, **characterized in that** the core element is an expanded glass plate, or the core element (10) is a metallic plate, preferably the metallic plate is an aluminum honeycomb plate.

5. Composite element according to any one of claims 1 to 4, **characterized in that** the at least one adhesive layer (13) is formed of an adhesive or adhesive mixture which is formed of or contains a dispersion adhesive, preferably the at least one adhesive layer (13) is formed of an adhesive or adhesive mixture which is formed of or contains a polyvinyl acetate.

6. Composite element according to one of claims 1 to 5, **characterized in that** the at least one adhesive layer (13) is formed from an adhesive or an adhesive mixture which is formed from or contains a polyaddition adhesive, preferably the polyaddition adhesive being a PUR (polyurethane) adhesive.

7. Composite element according to one of claims 1 to 6, **characterized in that** the at least one adhesive layer (13) is formed from an adhesive or adhesive mixture which is formed from or contains a polycondensation adhesive.

8. Composite element according to one of claims 5 to 7, **characterized in that** the adhesive or adhesive mixture is applied in an application amount of 50 - 200 g/m², preferably 75 - 150 g/m².

9. Composite element according to one of claims 1 to 8, **characterized in that** the at least one lacquer layer (14) comprises a lacquer or a lacquer system based on a polymer system, wherein in particular the polymer system is an isocyanate-crosslinking lacquer system, and wherein in particular the lacquer system is a polyurethane lacquer system, wherein preferably the polymer system comprises acrylate or is based on acrylate.

10. Composite element according to one of claims 1 to 9, **characterized in that** the at least one lacquer layer (14) is composed of two or more sub-layers, which sub-layers consist of identical or at least partially different lacquers.

11. Composite element according to one of claims 1 to 10, **characterized in that** the flame retardant is an organic or inorganic flame retardant.

12. Composite element according to claim 11, **characterized in that** the flame retardant content is 15 - 25% by weight of the at least one paint layer provided with flame retardant.

13. Composite element according to claim 11 or 12, **characterized in that** the flame retardant is halogen-free.

14. Composite element according to one of claims 1 to 13, **characterized in that** the at least one veneer element (11) meets the requirements for "flame retardancy" according to IMO 2010 FTPC Part 5.

15. Composite element according to one of claims 1 to 14, **characterized in that** at least the one or more layers (2a; 20a, 20b, 20c) of the at least one veneer element (11) made of veneer or exactly only the one or more layers (2a; 20a, 20b, 20c) made of veneer is provided with at least one veneer flame retardant, and wherein
the at least one veneer element (11) is provided with at least one veneer flame retardant, which at least one veneer flame retardant comprises an
a) inorganic, for example inorganic halogen-free or
b) organic, preferably organic halogen-free veneer flame retardant.

16. Composite element according to claim 15, **characterized in that** the veneer flame retardant is a water-based solution or is present in the form of a water-based solution, preferably the solution being mixed with additives which ensure uniform wetting of the wood fiber, and in particular the pH of the solution being between 2.5 and 7, in particular between 4 and 7.

17. Composite element according to claim 15 or 16, **characterized in that** the veneer flame retardant is a halogen-free solution.

18. Composite element according to one of claims 15 to 17, **characterized in that** the absorption amount of the veneer flame retardant, in particular of the inorganic solution in the at least one layer (2a; 20a, 20b, 20c) of veneer is between 8 and 23 percent by weight, based on the dry density of the veneer.

19. Composite element according to any one of claims 15 to 18, **characterized in that** the at least one adhesive layer (20d, 20e) is formed by an adhesive comprising or consisting of a polycondensation adhesive.

20. Composite element according to one of claims 15 to 19, **characterized in that** the density of the veneer material of which the at least one veneer layer (2a; 20a, 20b, 20c) consists, in particular the wood density, e.g. the bulk density of the wood, is in a range of 350 - 1200 kg/ m³, preferably in a range of 400 - 900 kg/ m³.

21. Composite element according to any one of claims 15 to 20, **characterized in that** the thickness of a layer (2a; 20a, 20b, 20c) of veneer is ≤ 2.5 mm.

## Revendications

1. Élément composite (100), comprenant
un élément central (10), au moins une couche de revêtement fixée à au moins une surface extérieure (12) de l'élément central (10), ladite au moins une couche de revêtement étant formée d'un élément de placage (11), et
au moins une couche adhésive (13), au moyen de laquelle la au moins une couche de recouvrement est reliée à la au moins une surface extérieure (12) de l'élément central (10), où
l'élément central (10) est formé d'un matériau non combustible, et l'au moins un élément de placage (11) est pourvu, au moins par zones, sur sa surface extérieure (11'), d'au moins une couche de vernis transparent (14),
**caractérisé en ce que**
l'élément de placage est constitué exactement d'une couche de placage ou l'élément de placage est formé de deux, trois ou plusieurs couches de placage, deux couches de placage voisines étant à chaque fois reliées entre elles par une couche de colle, et
le vernis ou le système de vernis formant la au moins une couche de vernis étant pourvu d'un ou de plusieurs agents ignifuges, l'épaisseur de la au moins une couche de vernis (14) se situant dans une plage de 250 à 1000 µm, par exemple de 250 à 900 µm, de préférence de 300 à 800 µm, en particulier de 500 à 800 µm.

2. Élément composite selon la revendication 1, **caractérisé en ce que** la surface extérieure (11') de l'au moins un élément de placage (11) est pourvue de la couche de vernis (14) sur toute sa surface.

3. Élément composite selon la revendication 1 ou 2, **caractérisé en ce que** l'élément central (10) est conçu de manière à passer le test d'incendie selon le code IMO FTP Part 1.

4. Élément composite selon l'une des revendications 1 à 3, **caractérisé en ce que** l'élément central est une plaque de verre expansé ou l'élément central (10) est une plaque métallique, de préférence la plaque métallique est une plaque d'aluminium en nid d'abeille.

5. Élément composite selon l'une des revendications 1 à 4, **caractérisé en ce que** ladite au moins une couche adhésive (13) est formée d'un adhésif ou d'un mélange d'adhésifs formé de ou contenant un adhésif à dispersion, de préférence ladite au moins une couche adhésive (13) est formée d'un adhésif ou d'un mélange d'adhésifs formé de ou contenant un acétate de polyvinyle.

6. Élément composite selon l'une des revendications 1 à 5, **caractérisé en ce que** ladite au moins une couche adhésive (13) est formée d'un adhésif ou d'un mélange d'adhésifs formé de ou contenant un adhésif de polyaddition, de préférence l'adhésif de polyaddition étant un adhésif PUR (polyuréthane).

7. Élément composite selon l'une quelconque des revendications 1 à 6, **caractérisé en ce que** ladite au moins une couche adhésive (13) est formée d'un adhésif ou d'un mélange d'adhésifs formé de ou contenant un adhésif de polycondensation.

8. Élément composite selon l'une des revendications 5 à 7, **caractérisé en ce que** la colle ou le mélange de colles est appliqué en une quantité de 50 à 200 g/m², de préférence de 75 à 150 g/m².

9. Élément composite selon l'une des revendications 1 à 8, **caractérisé en ce que** la au moins une couche de vernis (14) contient un vernis ou un système de vernis qui est basé sur un système polymère, le système polymère étant notamment un système de vernis réticulant les isocyanates, et le système de vernis étant notamment un système de vernis polyuréthane, le système polymère contenant de préférence de l'acrylate ou étant basé sur de l'acrylate.

10. Élément composite selon l'une des revendications 1 à 9, **caractérisé en ce que** la au moins une couche de vernis (14) est constituée de deux sous-couches ou plus, lesquelles sous-couches sont constituées de vernis identiques ou au moins partiellement différents.

11. Élément composite selon l'une des revendications 1 à 10, **caractérisé en ce que** l'agent ignifuge est un agent ignifuge organique ou inorganique.

12. Élément composite selon la revendication 11, **caractérisé en ce que** la proportion d'agent ignifugeant est de 15 à 25 % en poids d'au moins une couche de vernis pourvue d'un agent ignifugeant.

13. Élément composite selon la revendication 11 ou 12, **caractérisé en ce que** l'agent ignifuge est exempt d'halogène.

14. Élément composite selon l'une quelconque des revendications 1 à 13, **caractérisé en ce que** ledit au moins un élément de placage (11) satisfait aux exigences "d'inflammabilité difficile" selon la partie 5 de la norme IMO 2010 FTPC.

15. Élément composite selon l'une quelconque des revendications 1 à 14, **caractérisé en ce qu'**au moins une ou plusieurs couches (2a ; 20a, 20b, 20c) dudit au moins un élément de placage (11) en placage ou exactement seulement une ou plusieurs couches (2a ; 20a, 20b, 20c) en placage sont pourvues d'au moins un agent ignifuge de placage, et dans lequel
l'au moins un élément de placage (11) est pourvu d'au moins un agent ignifuge de placage, lequel au moins un agent ignifuge de placage est un
a) inorganique, par exemple inorganique sans halogène ou
b) un agent ignifuge de placage organique, de préférence exempt d'halogène organique.

16. Élément composite selon la revendication 15, **caractérisé en ce que** l'agent ignifuge de placage est une solution à base d'eau ou se présente sous la forme d'une solution à base d'eau, la solution étant de préférence mélangée à des additifs qui garantissent un mouillage uniforme des fibres de bois, et le pH de la solution étant notamment compris entre 2,5 et 7, en particulier entre 4 et 7.

17. Élément composite selon la revendication 15 ou 16, **caractérisé en ce que** l'agent ignifuge de placage est une solution sans halogène.

18. Élément composite selon l'une quelconque des revendications 15 à 17, **caractérisé en ce que** la quantité absorbée de l'agent ignifugeant de placage, en particulier de la solution inorganique dans ladite au moins une couche (2a ; 20a, 20b, 20c) de placage est comprise entre 8 et 23 pour cent en poids par rapport à la densité en feuilles du placage.

19. Élément composite selon l'une quelconque des revendications 15 à 18, **caractérisé en ce que** ladite au moins une couche adhésive (20d, 20e) est formée par un adhésif comprenant ou consistant en un adhésif de polycondensation.

20. Élément composite selon l'une des revendications 15 à 19, **caractérisé en ce que** la densité du matériau de placage dont est constituée ladite au moins une couche de placage (2a ; 20a, 20b, 20c), en particulier la densité du bois, par exemple la densité brute du bois, est comprise dans une plage de 350 à 1200 kg/ m³, de préférence dans une plage de 400 à 900 kg/ m³.

21. Élément composite selon l'une des revendications 15 à 20, **caractérisé en ce que** l'épaisseur d'une couche (2a ; 20a, 20b, 20c) de placage est ≤ 2,5 mm.
